# EUROPEAN PATENT APPLICATION

(11) **EP 3 656 612 A1**
(43) Date of publication of application: **27.05.2020**
(21) Application number: 18835641.4
(22) Date of filing: 04.07.2018
(51) Int. Cl.: B60R 13/02, B29C 65/00

(54) **INTERIOR MATERIAL FOR VEHICLES, COMPRISING SUBSIDIARY PART**

(30) Priority: 21.07.2017 KR 20170093033
(71) Applicant: Jeon, Hag Soo, Gwangju 62419 (KR)
(72) Inventor: KIM, Deok Rae, Cheonan-si Chungcheongnam-do 31155 (KR); JEON, Hag Soo, Cheonan-si Chungcheongnam-do 31155 (KR)
(74) Representative: Betten & Resch
(86) International application number: PCT/KR2018/007559
(87) International publication number: WO 2019/017624

(57) **Abstract**

Provided a vehicle interior component including a base portion in which a trench is formed; a skin portion on which a seam allowance portion stitched with a main seam is provided and which is wrapped around the base portion; an auxiliary portion that is interposed between the seam allowance portion and the trench; and a decoration seam that is formed in the skin portion in a manner that is in parallel with the seam allowance portion centerline, in which at least one of a first guidance means with which the auxiliary portion aligns with the base portion and a second guidance means with which the decoration seam aligns with the auxiliary portion is provided on the base portion.

## Description

### Technical Field

The present invention relates to a vehicle interior component that is installed within a vehicle.

### Background Art

A vehicle interior component refers to an instrument panel, a door trim, a console, or the like that is installed with a vehicle. The vehicle interior component includes a base portion, a cushion layer installed on the base portion, and a skin layer installed on the cushion layer.

The skin layer is made of cloth or has the form of a flexible plate while the base portion is formed in a complex three-dimensional shape.

When the base portion in the complex three-dimensional shape is wrapped with the skin layer, if the skin layer rises from the base portion or is wrinkled without flatly adhering to the base portion, it is determined that a vehicle interior component that includes the skin layer and the base portion is defective.

On the other hand, in a case where a decoration seam, such as a double stitch or a single stitch, that is formed on the skin layer is irregularly positioned in a zigzag manner with respect to a seam allowance portion without being positioned at a fixed distance from the seam allowance portion, it is also determined that a vehicle stitching component that includes such a decoration seam is defective.

### Disclosure

### Technical Problem

An objective of the present invention is to provide a vehicle interior component which is easy to manufacture and in which a decoration seam is precisely arranged.

### Technical Solution

According to an aspect of the present invention, there is provided a vehicle interior component including a base portion in which a trench is formed; a skin portion made of freely-flexible material, which is wrapped around the base portion; a seam allowance portion that, with a main seam, is stitched onto the skin portion along a seam allowance portion centerline; an auxiliary portion that is interposed between the seam allowance portion and the trench and that combines the seam allowance portion with the trench; and a decoration seam that is formed in the skin portion in a manner that is positioned at a fixed distance from the seam allowance portion or the seam allowance portion centerline.

According to an embodiment, in the vehicle interior component, when the auxiliary portion is inserted into the trench, the auxiliary portion may be bent in a direction that is the same as a direction of extension of the trench; the auxiliary portion may cause at least one of a direction of extension of the seam allowance portion, a direction of extension of the seam allowance portion centerline, and a direction of extension of the decoration seam to be the same as the direction of the extension of the trench; and the auxiliary portion may suppress elastic transformation and bending transformation of the seam allowance portion in such a manner that the seam allowance portion is fixed at a fixed position in the trench, and may be made of harder material than the skin portion.

According to an embodiment, in the vehicle interior component, the seam allowance portion may be combined at a fixed position on the auxiliary portion, using the main seam; the auxiliary portion may include a first guidance means that protrudes in such a manner as to be inserted into the trench; and a shape of a cross section of the first guidance means of the auxiliary portion before forming the decoration seam may be substantially the same as a shape of a cross section of the first guidance means of the auxiliary portion after forming decoration seam.

According to an embodiment, in the vehicle interior component, the seam allowance portion may be combined at a given position on the auxiliary portion, using the main seam; the skin portion may be combined with the auxiliary portion by coupling the seam allowance portion and the auxiliary portion; a protruding portion of the auxiliary portion, which is to be inserted into the trench, may have the same shape before and after inserting the auxiliary portion into the trench; and a curve or slope surface along which the auxiliary portion arrives at a given position in the trench may be provided on the protruding portion of the auxiliary portion.

According to an embodiment, in the vehicle interior component, when a direction of the insertion of the auxiliary portion into the trench is defined as a second direction and a direction perpendicular to the second direction is defined as a third direction, a first guidance means along which the auxiliary portion arrives at a given position in the trench along the third direction when the auxiliary portion is pushed down in the second direction may be provided; and a stopping means that, within a depth of the trench, blocks the auxiliary portion from moving when the auxiliary portion is pushed down in the second direction may be provided.

According to an embodiment, in the vehicle interior component, the first guidance means may include at least one of a first inclination surface of the auxiliary portion, a second inclination surface of the auxiliary portion, a first internal wall of the trench, and a second internal wall of the trench; and the stopping means may be a portion where the first inclination surface and the second inclination surface of the auxiliary portion meet or may be a portion where the first internal wall and the second internal wall of the trench meet.

### Advantageous Effects

A vehicle interior component according to the present invention includes an auxiliary portion that is inserted into a trench in a base portion. In this case, at least one of a first guidance means, a second guidance means, and a stopping means is included.

When the first guidance means, the second guidance means, or the stopping mean is provided, a seam allowance portion can be coupled at a given position on a base portion, and a decoration seam can be positioned at a fixed distance in a manner that is in parallel with the seam allowance portion or a seam allowance portion centerline.

A defection phenomenon where the decoration seam exposed to the outside is formed in a zigzag manner can be prevented with at least one of the auxiliary portion, the first guidance means, the second guidance means, and the stopping means.

With a low defective rate and ease of manufacturing, the productivity of the vehicle interior component can be greatly improved.

In addition, with the precisely-aligned decoration seam, the vehicle interior component can provide an elegant external appearance.

### Description of Drawings

FIG. 1 is a schematic diagram illustrating a vehicle interior component according to the present invention;
FIG. 2 is a schematic cross-sectional diagram of the vehicle interior component according to the present invention;
FIG. 3 is a cross-sectional diagram of a vehicle interior component as a comparative example;
FIG. 4 is a cross-sectional diagram of a theoretical trench as a comparative example;
FIG. 5 is a cross-sectional diagram of a real-world trench as a comparative example;
FIG. 6 is a schematic diagram illustrating a decoration seam as a comparative example;
FIGS. 7A to 7C are schematic diagrams, each illustrating the vehicle interior component according to the present invention;
FIG. 8 is a schematic diagram illustrating a cross section of a base portion according to the present invention;
FIG. 9 is a schematic diagram illustrating a decoration seam of the vehicle interior component according to the present invention;
FIGS. 10A to 10C are schematic diagrams, each illustrating another vehicle interior component according to the present invention; and
FIG. 11 is a partial perspective diagram illustrating a wing notch portion according to the present invention.

### Mode for Invention

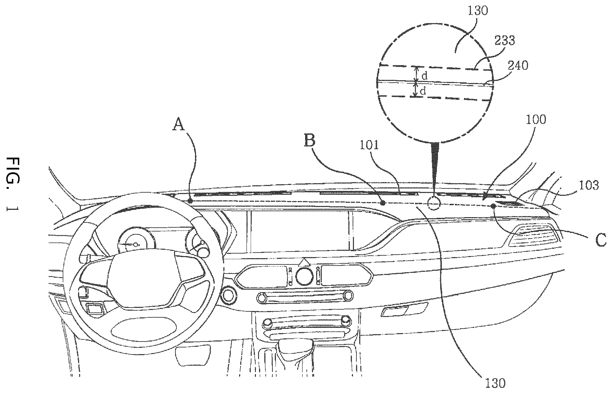

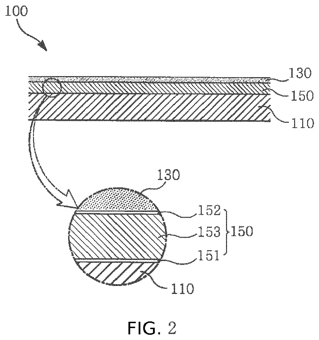

FIG. 1 is a schematic diagram illustrating a vehicle interior component 100. FIG. 2 is a schematic cross-sectional diagram of the vehicle interior component 100.

The vehicle interior component 100 includes a base portion 110 and a skin portion 130.

The base portion 110 serves as a frame of the vehicle interior component. Examples of the vehicle interior component include an instrument panel, a console, a door trim, a glove box, a pillar garnish, and so on. FIG. 1 illustrates an instrument panel, as an example of the base portion 110, that is installed in the front of a vehicle driver compartment. A first vent hole 101 through which air flows out toward a front glass window and a second vent hole 103 through which air flows out either toward a lateral glass window or inward are formed, to the front glass window side and to the lateral glass window side, respectively, in the instrument panel.

The base portion 110, as a portion that provides the strength of the vehicle interior component 100, is mounted on a vehicle.

The base portion 110 is formed of synthetic resin, such as polypropylene or polyethylene, wood, or metal. The base portion 110 is formed to have a curved surface, a curved surface, a recessed surface, or the like in a non-planar three-dimensional shape in order to reduce the risk of bodily injury to a driver or a passenger when a collision occurs and to provide an elegant external appearance.

A cushion portion 150 is inserted between the base portion 110 and the skin portion 130 in order to prevent the risk of bodily injury to a driver or a passenger when he/she bumps against the vehicle interior component and to improve the touch that he/she feels when touching the vehicle interior component.

The cushion portion 150 includes an elastic body. As an example, the cushion portion 150 includes a first outer cover 151 and a second outer cover 152 that are arranged to face each other, and a filament layer 153 that is inserted between the first outer cover 151 and the second outer cover 152. The filament layer 153 includes cotton that consists of regularly- or irregularly-tangled hairs or fibers, or includes knit fabric. The filament layer 153 may be formed of sponge, rubber, or the like.

The first outer cover 151 and the second outer cover 152 prevent members that make up the filament layer 153 from being dispersed and, at the same time, are combined with the base portion 110 and the skin portion 130, respectively, instead of the filament layer 153. As an example, the first outer cover 151 is bonded to the base portion 110, and the second outer cover 152 is bonded to the skin portion 130.

For convenience of description in the present specification, the cushion portion 150 will not be described in detail below. However, the cushion portion 150 may be bent together with the skin portion 130 in a state of being combined with the skin portion 130, or may be wrapped around the base portion 110 together with the skin portion 130. The wrapping refers to covering a surface of the base portion 110 without any wrinkle or gap while tightly pulling the skin portion 130.

The skin portion 130 serves useful purposes, such as improving texture, improving touch, and providing an elegant external appearance, and is made of freely-flexible material, such as natural leather, synthetic leather, or fabric.

An end portion of the skin portion 130 wrapped around the base portion 110 extends inward around an end of the base portion 110 and thus is combined with a bottom surface or an internal sidewall surface of the base portion 110. This is because, when the end of the skin portion 130 is not combined with the bottom surface or the internal sidewall surface of the base portion 110, due to the elasticity of the skin portion 130, a wrinkle is formed on the skin portion 130.

An adhesive may be applied between the skin portion 130 and the base portion 110. In a case where the cushion portion 150 is present, the adhesive is applied to the cushion portion 150, and, specifically, between the first outer cover 151 and the base portion 110.

The adhesive does not have adhesion strength at room temperature, but has adhesion strength only in a specific setting temperate range above room temperature. When the skin portion 130 is wrapped around the base portion 110, the vehicle interior component 100 is heated to a setting temperature at which the adhesive acts. With the adhesive that is heated to the setting temperature, the base portion 110 and the skin portion 130 are bonded to each other.

After the adhering by the adhesive occurs, it is difficult to remove a wrinkle occurring on the skin portion 130, and thus as many wrinkles or gaps as possible have to be removed in a wrapping process.

Before the wrapping around the base portion 110 occurs, the skin portion 130 is prepared in the form of a flat sheet. When two seam allowance portions 230 in the form of a curved sheet are stitched onto two skin portions 130, respectively, in the form of a flat sheet, the skin portion 130 that results from the stitching has a three-dimensional shape that fits in with the external form of the base portion 110.

The skin portion 130 includes a first sheet 131 that is positioned in one direction with respect to the seam allowance portion 230, and a second sheet 132 that is positioned in the other direction. The skin portion 130 includes the first sheet 131 that covers a first area of the base portion 110 and the second sheet 132 that covers a second area of the base portion 110.

With a main seam 231, the seam allowance portions 230 are stitched onto the first sheet 131 and the second sheet 132, respectively, in a manner that protrudes from one surface of the skin portion 130.

In order to decide a reference position for fixing the skin portion 130, a trench 118 into which the seam allowance portion 230 is to be inserted is formed in the base portion 110.

The seam allowance portion 230 needs to be tightly inserted into the trench 118 without allowing for shaking, in order to provide a guide for aligning the skin portion 130 with respect to the base portion 110 or to exert a force for holding the skin portion 130 that is tightly pulled in opposite directions with respect to the seam allowance portion 230.

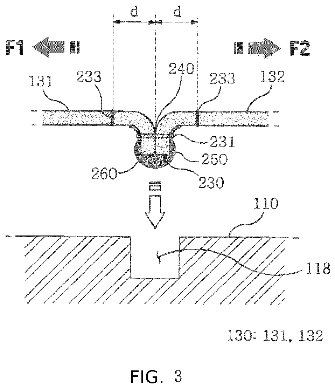

FIG. 3 is a cross-sectional diagram illustrating a seam allowance portion 230 as a comparative example. An edge portion of the first sheet 131 and an edge portion of the second sheet 132 are stitched onto each other using the main seam 231, in a state where these edge portions are brought into contact with each other in an overlapping manner. Thus, the seam allowance portion 230 is formed. The main seam 231 refers to a string or a thread with which the overlapping edge portions of the first sheet 131 and the second sheet 132 are stitched together.

A seam pad 250 and a filler 260 are added to the seam allowance portion 230 as the comparative example, and thus the seam allowance portion 230 is formed in the form of a water drop. An elastic body in the form of a water drop, after inserted into the trench 118, is elastically transformed, and the skin portion 130 is temporarily fixed due to an elastic force of the elastic body in the form of a water drop, which is inserted into the trench 118.

The seam pad 250 includes leather, cloth, or the like in the form of a water drop, which covers the seam allowance portion 230 that protrudes toward the base portion 110.

The filler 260 is a material that is inserted between the seam allowance portion 230 and the seam pad 250 and thus keeps the seam allowance portion 230 firmly in the form of a water drop.

When the seam allowance portion 230 is inserted into the trench 118, the filler 260 and the seam pad 250 are elastically transformed and thus fills a gap between the seam allowance portion 230 and the trench 118, thereby generating a force for locking into a position.

With the main seam 231, one end of the seam pad 250 is sewed onto an internal surface of the edge portion of the first sheet 131. With the main seam 231, the other end of the seam pad 250 is sewed onto an internal surface of the edge portion of the second sheet 132. By performing one-time stitching that forms the main seam 231, one end of the seam pad 250, and the other end thereof, the edge portion of the first sheet 131, the end portion of the second sheet 132, and the filler 260 are stitched simultaneously.

A seam allowance portion centerline 240 is formed on a surface of the skin portion 130, which is opposite in direction to the seam allowance portion 230, when end portions of the first sheet 131 and the second sheet 132 that make up the skin portion 130 are brought into contact with each other.

A decoration seam 233 including a double stitch or a single stitch is formed over both sides with respect to the seam allowance portion centerline 240. The decoration seam 233 and the seam allowance portion centerline 240 are exposed to the outside and thus have to be spaced a fixed distance away from each other and be formed in a straight line or in a curved line.

The decoration seam 233 is formed on the skin portion 130 in a manner that is in parallel with the seam allowance portion 230 or the seam allowance portion centerline 240 with a fixed distance in between.

When the seam allowance portion 230 that, with the seam pad 250 or the filler 260, is formed in the form of a water drop is inserted into the trench 118 and thus is elastically transformed, a combining force for the skin portion 130 is generated. When the fixation due to the elastic transformation occurs, if force F1 that pulls the first sheet 131 is exerted, there occurs a problem in that the second sheet 132 is pulled in the same direction. When force F2 that pulls the second sheet 132 is exerted, there occurs a problem in that the first sheet 131 is pulled in the same direction. Therefore, there occurs a problem in that an operator has to repeatedly operate an operation of removing a wrinkle in the first sheet 131 or the second sheet 132.

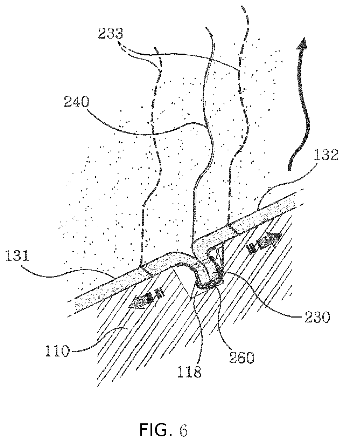

The decoration seam 233 has to be spaced a distance d away from the seam allowance portion 230 or the seam allowance portion centerline 240. If the seam allowance portion 230 inserted into the trench 118 is rotated or zigzag-shaped, or if an amount of transformation with respect to the trench 118 changes in an extension direction, the decoration seam 233, as illustrated in FIG. 6, is also necessarily zigzag-shaped.

When the seam allowance portion centerline 240 is zigzag-shaped, or if the decoration seam 233 is zigzag-shaped, it is determined that the vehicle interior component 100 is defective. In a state where with an adhesive, the skin portion 130 is completely combined with the base portion 110, only when a seam is zigzag-shaped, it is determined that an entire vehicle interior component is defective.

Because the seam pad 250, the seam allowance portion 230, and the filler 260 are only elastically combined with the seam allowance portion 230, the seam allowance portion 230 moves in a straight line or rotates within the trench 118. In this case, the operator has to perform a repetitive operation in order to solve a defection problem in that the seam allowance portion centerline 240 or the decoration seam 233 is displaced out of a given position and thus is zigzag-shaped.

On the other hand, a problem in that the decoration seam 233 improperly aligns due to movement of the seam allowance portion 230 inserted into the trench 118 is further exacerbated due to a mold removal angle ⓔ.

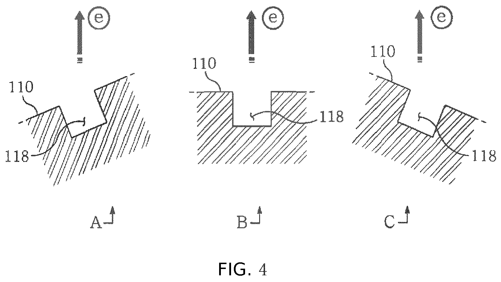

FIG. 4 is a cross-sectional diagram of the base portion 110 in which the trench 118 in a theoretical form thereof is formed as a comparative example. With reference to FIG. 4, the base portion 110 has a 3D shape, and therefore, normal line vectors perpendicular to the surface of the base portion 110 face in different directions according to a position of the trench 118.

At a first position A, the base portion 110 has an inclination surface that is sloped to the left. At a second position B, the base portion 110 has an inclination surface that is in parallel with the ground. At a third position C, the base portion 110 has an inclination surface that is sloped to the right. The trench 118 that has a rectangular shape is formed to be perpendicular to each inclination surface of the base portion 110.

In a case where synthetic resin is injected into a mold for casting the base portion 110, a protrusion portion or a core for forming the trench 118 is provided on the mold. The mold on which the protrusion portion or the core is provided is removed, in one direction, from the base portion 110, and all the mold removal angles ⓔ face in one direction without considering characteristics of the first position to the third position.

At the mold removal angle ⓔ, the core on the mold is easily taken out of the trench 118 at the second position B. However, the core is blocked by a sidewall of the trench 118 at the first position A or a sidewall of the trench 118 at the third position C and thus cannot be removed from the trench 118. Therefore, when the trench 118 at each position is sufficiently cured, there occurs a problem in that the mold is difficult to remove. On the other hand, before the trench 118 at each position is cured, there occurs a problem in that the mold must be forcibly removed, thereby crushing the sidewall of the trench 118.

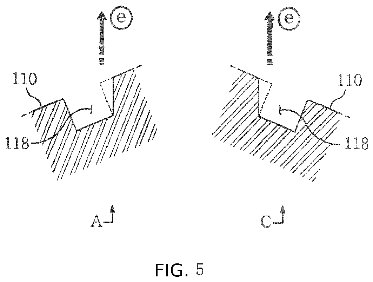

FIG. 5 is a cross-sectional diagram of a real-world trench 118 as a comparative example. When considering the easy removal of the mold or the forced removal thereof, a change is made to the trench 118 in such a manner that one of the sidewalls of the trench 118 faces in a direction that is consistent with the mold removal angle ⓔ.

As an example, a right sidewall of the trench 118 at the first position A prevents the mold from being removed, and therefore, the right sidewall thereof faces in the direction that is consistent with the mold removal angle ⓔ. As an example, a left sidewall of the trench 118 at the third position C prevents the mold from being removed, and therefore, the left sidewall thereof faces in the direction that is consistent with the mold removal angle ⓔ.

Due to the trench 118 having the sidewall that is transformed according to the model removal angle ⓔ, the seam allowance portion 230 further deviates from a home position thereof. The seam allowance portion 230 inserted into the trench 118 decreases in an elastic holding force thereof within the trench 118, and thus an amount of movement increases. As a result, as illustrated in FIG. 6, there occurs a defect in which the seam allowance portion centerline 240 or the decoration seam 233 is displaced out of a given tracking path and thus is formed in a zigzag manner.

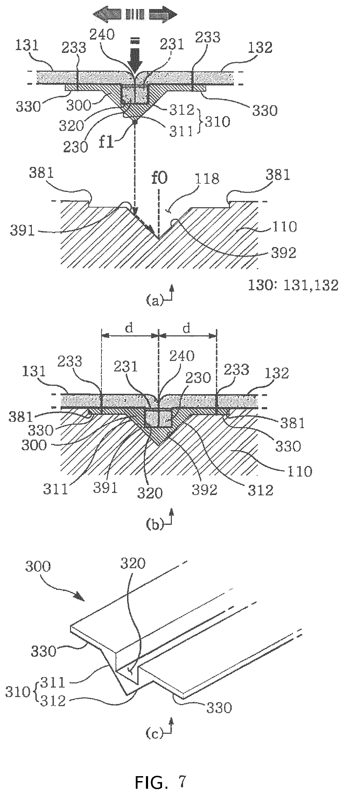

FIG. 7 is a schematic diagram illustrating the vehicle interior component 100 according to the present invention.

FIGS. 7A and 7B are diagrams, each illustrating a cross section of the vehicle interior component 100. FIG. 7A illustrates a state that is attained before the skin portion 130 is wrapped around the base portion 110. FIG. 7B illustrates a state that is attained after the skin portion 130 is wrapped around the base portion 110. FIG. 7C is a perspective diagram illustrating an auxiliary portion 300.

In order to prevent a defect in which the decoration seam 233 is formed in a zigzag manner and to correct a wrapping defect due to a decrease in force that combines the seam allowance portion 230 and the trench 118, the vehicle interior component 100 according to the present invention includes the auxiliary portion 300 that is interposed between the seam allowance portion 230 and the trench 118. The combining of the auxiliary portion 300 according to the present invention and the trench 118 prevents the seam allowance portion 230 from moving and causes the decoration seam 233 to exactly follow a given tracking path.

According to an embodiment, there is provided at least one of a first guidance means 310 with which the auxiliary portion 300 aligns with the base portion 110, a second guidance means 320 with which the decoration seam 233 aligns with the auxiliary portion 300, and a stopping means that regulates the depth to which the auxiliary portion 300 is inserted into the trench 118.

The auxiliary portion 300 extends along the seam allowance portion 230. The seam allowance portion 230 is sewed onto a surface of the base portion 110 in a three-dimensional direction along a tracking path of the trench 118 that extends in a three-dimensional direction. The auxiliary portion 300 extends from a starting point of the trench 118 to an ending point thereof while be bent along a tacking path that is the same as that of the seam allowance portion 230. Therefore, the auxiliary portion 300 is made of synthetic resin in such a manner that the auxiliary portion 300 is flexible along the extension direction.

In addition, unlike in the comparative example, according to the present invention, the seam allowance portion 230 is suppressed from moving within the trench 118. Unlike in the comparative example where the auxiliary portion 300 is transformed according to the shape of the trench 118 and where a shape thereof is thus changed, a cross section of the auxiliary portion 300 according to the present invention, which is formed of synthetic resin, is maintained the same as a predetermined shape.

A first internal wall 391 and a second internal wall 392 that face each other are formed in the trench 118. The first internal wall 391 has a curve or a slope along which the auxiliary portion 300 is moved toward the second internal wall 392 due to physical interference when the auxiliary portion 300 is inserted into the trench 118. The second internal wall 392 has a curve or a slope along which the auxiliary portion 300 is moved toward the first internal wall 391 due to physical interference when the auxiliary portion 300 is inserted into the trench 118.

The first guidance means 310 includes at least one of the respective curves and slopes of the first internal wall 391 and the second internal wall 392, and guides the auxiliary portion 300 to a given position in the trench 118. The greater depth the trench 118 has, the smaller diameter the trench 118 has. That is, the trench 118 has a "V"-shaped cross section.

On the other hand, the first guidance means 310 may be provided on the auxiliary portion 300. The first guidance means 310 includes a protruding part of the auxiliary portion 300 that is inserted into the trench 118, and includes at least one of the first inclination surface 311 and the second inclination surface 312 that are formed on one side of the auxiliary portion 300 and the other side thereof, respectively.

The first inclination surface 311 has a curve or a slope along which the auxiliary portion 300 is moved toward the second inclination surface 312 due to physical interference when the auxiliary portion 300 is inserted into the trench 118. The second inclination surface 312 has a curve or a slope along which that the auxiliary portion 300 is moved toward the first inclination surface 311 due to physical interference when the auxiliary portion 300 is inserted into the trench 118. The first inclination surface 311 is formed in a manner that is in parallel with the first internal wall 391 of the trench 118. The second inclination surface 312 is formed in a manner that is in parallel with the second internal wall 392 of the trench 118.

As an example, with the first inclination surface 311 and the second inclination surface 312, the first guidance means 310 has a "V"-shaped cross-section. The auxiliary portion 300 on which the first guidance means 310 is provided has a cross-section in the form of an inverted triangle.

When the first guidance means 310 is provided, although an end portion f1 of the auxiliary portion 300 is inserted into the trench 118 from arbitrary direction, deviating from a vertical line through a setting position f0 in the trench 118, the end portion f1 of the auxiliary portion 300 is slid along a curve or a slope of the first internal wall 391 up to the second internal wall 392 side and then returns at the setting position f0.

Although the end portion f1 of the auxiliary portion 300 moves through the setting position f0 up to the second internal wall 392 side, the curve or the slope on the second internal wall 392 prevents the end portion f1 that comes into contact with the second internal wall 392 from moving further, and thus aligns exactly at the setting position f0 in the trench 118.

The first guidance means 310 is a curve or a slope that is formed on the auxiliary portion 300 or the trench 118 in such a manner that, when a load is applied vertically to the auxiliary portion 300 in order to insert the auxiliary portion 300 into the trench 118, a horizontal component force that causes the auxiliary portion 300 to stay at the setting position f0 in the trench 118 occurs.

In addition, a phenomenon where the first inclination surface 311 in contact with the first internal wall 391 moves the auxiliary portion 300 up to the first internal wall 391 side is prevented, and a phenomenon where the second inclination surface 312 in contact with the second internal wall 392 moves the auxiliary portion 300 up to the second internal wall 392 side is prevented. Therefore, the operator can pull much harder both sides of the skin portion 130 with respect to the seam allowance portion 230 fixed at a home position thereof in the trench 118 in order to greatly improve the productivity of the operation of wrapping the skin portion 130. Although the adhesive is not used, the skin portion 130 can be pulled much harder in a state where the seam allowance portion centerline 240 is strongly pressed against the trench 118 using a rib blade.

In addition, due to the first internal wall 391 and the second internal wall 392 that are formed in a curved or sloped manner, the trench 118 that maintains the same shape without any change regardless of the mold removal angel ⓔ is formed.

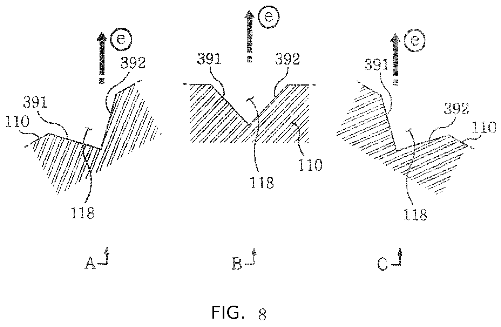

FIG. 8 is a cross-sectional diagram of the trench 118 on which the first guidance means 310 according to the present invention is provided. The trench 118 according to the present invention includes the first internal wall 391 and the second internal wall 392 each of which has a curve and a slope. Thus, regardless of the first position A, the second position B, and the third position C, the shape of the trench 118 can be prevented from being crushed due to the mold removal angle ⓔ, and the problem in that the mold is difficult to remove can be solved. As a result, the trench 118 according to the present invention can be formed to have the same shape regardless of the position. Therefore, regardless of the position, the precision of the position where the base portion 110 and the seam allowance portion 230 are coupled can be ensured using the auxiliary portion 300 in the same shape, and thus the decoration seam 233 or the seam allowance portion centerline 240 can be formed, without being crooked, at a home position thereof.

With reference back to FIG. 7, when the first guidance means 310 that is to be inserted into the trench 118 is formed on one surface of the auxiliary portion 300, the second guidance means 320 along which the seam allowance portion 230 is to be inserted is formed on the other surface of the auxiliary portion 300.

The second guidance means 320 is provided on an upper surface of the auxiliary portion 300 and includes a groove along which the seam allowance portion 230 is inserted. As an example, in a case where the seam allowance portion 230 has a rectangular cross section, the second guidance means 320 is formed in the form of a groove with a rectangular cross section.

When the seam allowance portion 230 is inserted along the second guidance means 320, the seam allowance portion 230 aligns with the auxiliary portion 300, and the decoration seam 233 that aligns with the seam allowance portion 230, in turn, aligns with the auxiliary portion 300. The seam allowance portion centerline 240 is pushed down in a state of aligning with the rib blade (not illustrated) and a needle of a sewing machine that forms the decoration seam 233 is fixed at a distance on the rib blade. Thus, when the seam allowance portion centerline 240 is aligned with the rib blade, the decoration seam 233, in turn, is formed at the same distance in a manner that is in parallel with the seam allowance portion centerline 240. When the seam allowance portion 230 fits precisely into the auxiliary portion 300, the decoration seam 233, in turn, is formed at a precise position thereof on the auxiliary portion 300.

With the first guidance means 310, the auxiliary portion 300 aligns with the base portion 110, and with the second guidance means 320, the decoration seam 233 and the seam allowance portion centerline 240 align with the auxiliary portion 300. The stopping means regulates the depth to which the auxiliary portion 300 is inserted into the trench 118. Therefore, due to the auxiliary portion 300, the decoration seam 233 aligns with a precise position thereof on the base portion 110.

With the first guidance means 310 and the second guidance means 320, the seam allowance portion centerline 240 aligns precisely with the base portion 110. Thus, the decoration seam 233, which is formed by a needle that is positioned at a distance of d away from the seam allowance portion centerline 240, also aligns precisely with the base portion 110.

Therefore, with at least one of the first guidance means 310, the second guidance means 320, and the stopping means, the defection problem in that the seam allowance portion centerline 240 or the decoration seam 233 is zigzag-shaped can be largely solved. In addition, the operator does not need to perform the wrapping operation of repeatedly moving the seam allowance portion centerline 240 or the decoration seam 233 into position in parallel with the setting position f0 in the trench 118, and thus the productivity can also be greatly improved.

In addition, when the operator only pushes down the seam allowance portion 230, the auxiliary portion 300 is inserted into the trench 118, and the seam allowance portion 230 and the decoration seam 233 maintain the respective precise positions. This provides an advantage in that the manufacturing is very easy and is quickly performed.

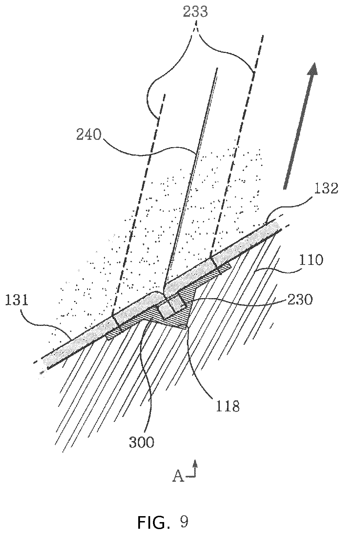

FIG. 9 is a schematic diagram illustrating the decoration seam 233 in the vehicle interior component 100 according to the present invention.

With the auxiliary portion 300, the first guidance means 310, and the second guidance means 320, the seam allowance portion 230 is precisely inserted into the trench 118. Therefore, as illustrated in FIG. 9, the seam allowance portion centerline 240 and the decoration seam 233, which align with the seam allowance portion 230, align precisely with the trench 118 and the base portion 110 without being zigzag-shaped, as if a line were drawn with a ruler.

The seam allowance portion centerline 240 and the decoration seam 233 that align precisely with the base portion 110 can provide an elegant external appearance, and the defection problem can be solved.

With the decoration seam 233, the auxiliary portion 300 is stitched onto the skin portion 130. Alternatively, with the main seam 231, the auxiliary portion 300 is stitched onto the seam allowance portion 230. When the stitching is performed in a state where the seam allowance portion 230 is inserted along the second guidance means 320 formed on the other surface of the auxiliary portion 300, the tight combining of the auxiliary portion 300 and the skin portion 130/the seam allowance portion 230 is ensured, and at the same time, the decoration seam 233 align precisely with the auxiliary portion 300.

As an example, a first wing portion 330 that, with the decoration seam 233, is stitched onto the skin portion 130 is provided on the auxiliary portion 300 in FIG. 7. With the first wing portion 330, the decoration seam 233 aligns precisely with the auxiliary portion 300.

A jaw portion 381 that corresponds to a stepped jaw that blocks the wing portion 330 from moving lengthwise is formed around an entrance to the trench 118 in the base portion 110. The jaw portion 381 prevents the auxiliary portion 300 from escaping from the trench 118 in a process of tightly pulling the skin portion 130 with respect to the seam allowance portion 230. In addition, the jaw portion 381 prevents a phenomenon where the skin portion 130 arises from the surface of the base portion 110, within the thickness of the first wing portion 330, and makes it possible for the skin portion 130 to have a uniform thickness when attached.

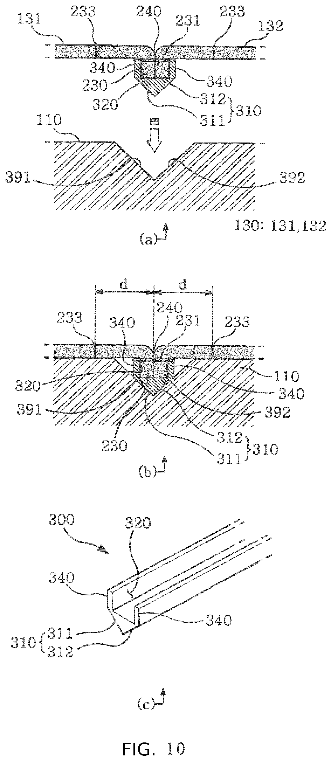

FIG. 10 is a schematic diagram illustrating another vehicle interior component 100 according to the present invention.

A second wing portion 340 that, with the main seam 231, is stitched onto the seam allowance portion 230 is provided on the auxiliary portion 300. With the second wing portion 340 that is stitched onto the seam allowance portion 230, the seam allowance portion 230 aligns precisely with the auxiliary portion 300.

The decoration seam 233 is in a state of aligning with the seam allowance portion 230 in a manner that maintains a distance of d. Thus, the decoration seam 233 also aligns precisely with the auxiliary portion 300 with the seam allowance portion 230 in between.

Therefore, although the auxiliary portion 300 in FIG. 10 is used, the decoration seam 233, as illustrated in FIG. 9, is formed precisely with respect to the base portion 110.

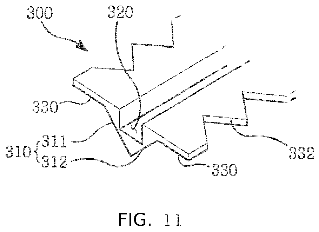

FIG. 11 illustrates an auxiliary portion 300 according to another embodiment of the present invention. When the trench 118 extends along a three-dimensional tracking path, the auxiliary portion 300 also has the same tracking path as the trench 118 while bent in the extension direction. A wing notch portion 332 is provided in order to facilitate bending in the extension direction of the auxiliary portion 300. The wing notch portion 332 results from making a notch in a part of the first wing portion 330 formed on both flank surfaces of the auxiliary portion 300, and serves to bring the first wing portion 330 into tight contact with the trench 118 without any gap.

## Claims

1. A vehicle interior component comprising:
a base portion in which a trench is formed;
a skin portion made of freely-flexible material, which is wrapped around the base portion;
a seam allowance portion that, with a main seam, is stitched onto the skin portion along a seam allowance portion centerline;
an auxiliary portion that is interposed between the seam allowance portion and the trench and that combines the seam allowance portion with the trench; and
a decoration seam that is formed in the skin portion in a manner that is positioned at a fixed distance from the seam allowance portion or the seam allowance portion centerline;
wherein, when the auxiliary portion is inserted into the trench, the auxiliary portion is bent in a direction that is the same as a direction of extension of the trench,
wherein the auxiliary portion causes at least one of a direction of extension of the seam allowance portion, a direction of extension of the seam allowance portion centerline, and a direction of extension of the decoration seam to be the same as the direction of the extension of the trench,
wherein a first guidance means with which the auxiliary portion aligns with the base portion is provided, and
wherein the first guidance means includes a first inclination surface and a second inclination surface that are provided on the auxiliary portion and a first internal wall and a second internal wall that are provided in the trench.

2. The vehicle interior component according to claim 1, wherein the auxiliary portion extends along the seam allowance portion, and
wherein the auxiliary portion is made of synthetic resin and thus has a shape of a cross section that is maintained the same as a setting shape while bent in the direction of the extension of the auxiliary portion.

3. The vehicle interior component according to claim 1, wherein the arbitrary portion extends lengthily along a first direction that is the same as at least one of the direction of the extension of the seam allowance portion, the direction of the extension of the seam allowance portion centerline, the direction of the extension of the decoration seam, and the direction of the extension of the trench, while having the same shape of a cross section.

4. The vehicle interior component according to claim 1, wherein the first internal wall and the second internal wall that face each other are formed in the trench,
wherein the first internal wall has a curve or a slope along which the auxiliary portion is moved toward the second internal wall due to physical interference when the auxiliary portion is pushed down with respect to the trench, and
wherein the second internal wall has a curve or a slope along which the auxiliary portion is moved toward the first internal wall due to physical interference when the auxiliary portion is pushed down with respect to the trench.

5. The vehicle interior component according to claim 1, wherein at least one of the trench and the auxiliary portion has a "V"-shaped cross section.

6. The vehicle interior component according to claim 1, wherein the first guidance means that is to be inserted into the trench is formed on one surface of the auxiliary portion, and
wherein a second guidance means along which the seam allowance portion is inserted is formed on the other surface of the auxiliary portion.

7. The vehicle interior component according to claim 1, wherein a second guidance means with which the decorative seam aligns with the auxiliary portion is provided,
wherein, when the seam allowance portion is inserted along the second guidance means, the decoration seam is formed at a given position on the auxiliary portion,
wherein, when the first guidance means is inserted into the trench, the auxiliary portion aligns with the base portion, and
wherein with the first guidance means and the second guidance means, the decoration seam aligns with a given position on the base portion.

8. The vehicle interior component according to claim 1, wherein with the decoration seam, the arbitrary portion is stitched onto the skin portion.

9. The vehicle interior component according to claim 1, wherein a first wing portion that, with the decoration seam, is stitched onto the skin portion is provided on the auxiliary portion, and
wherein with the wing portion, the decoration seam aligns with the auxiliary portion.

10. The vehicle interior component according to claim 1, wherein a first wing portion is provided on both flank surfaces of the auxiliary portion, and
wherein a jaw portion that blocks the wing portion from moving lengthwise is formed around an entrance to the trench in the base portion.

11. The vehicle interior component according to claim 1, wherein a first wing portion is provided on both flank surfaces of the auxiliary portion, and
wherein a wing notch portion is provided by making a notch in a part of the first wing portion.

12. The vehicle interior component according to claim 1, wherein the decoration seam is formed at a given position with respect to the seam allowance portion,
wherein by combining the seam allowance portion and the auxiliary portion, the decoration seam aligns with a given position on the auxiliary portion, and
wherein, when the auxiliary portion is inserted into the trench, the decoration seam and the seam allowance portion centerline are positioned at a fixed distance from each other and align with a given potion on the base portion.

13. The vehicle interior component according to claim 1, wherein, when a direction of the insertion of the auxiliary portion into the trench is defined as a second direction and a direction perpendicular to the second direction is defined as a third direction,
a stopping means that, within a depth of the trench, blocks the auxiliary portion from moving when the auxiliary portion is pushed down in the second direction is provided, and
wherein the stopping means is a portion where the first inclination surface and the second inclination surface of the auxiliary portion meet, or a portion where the first internal wall and the second internal wall of the trench meet.

14. A vehicle interior component comprising:
a base portion in which a trench is formed;
a skin portion made of freely-flexible material, which is wrapped around the base portion;
a seam allowance portion that, with a main seam, is stitched onto the skin portion along a seam allowance portion centerline;
an auxiliary portion that is interposed between the seam allowance portion and the trench and that combines the seam allowance portion with the trench; and
a decoration seam that is formed in the skin portion in a manner that is positioned at a fixed distance from the seam allowance portion or the seam allowance portion centerline;
wherein, when the auxiliary portion is inserted into the trench, the auxiliary portion is bent in a direction that is the same as a direction of extension of the trench,
wherein the auxiliary portion causes at least one of a direction of extension of the seam allowance portion, a direction of extension of the seam allowance portion centerline, and a direction of extension of the decoration seam to be the same as the direction of the extension of the trench, and
wherein a second wind portion that, with the main seam, is stitched onto the seam allowance portion is provided on the auxiliary portion.

15. A vehicle interior component comprising:
a base portion in which a trench is formed;
a skin portion that is wrapped around the base portion;
a seam allowance portion that, with a main seam, is stitched onto the skin portion along a seam allowance portion centerline;
an auxiliary portion that is interposed between the seam allowance portion and the trench and that combines the seam allowance portion with the trench; and
a decoration seam that is formed in the skin portion in a manner that is positioned at a fixed distance from the seam allowance portion or the seam allowance portion centerline,
wherein, when the auxiliary portion is inserted into the trench, the auxiliary portion is bent in a direction that is the same as a direction of extension of the trench,
wherein the auxiliary portion causes at least one of a direction of extension of the seam allowance portion, a direction of extension of the seam allowance portion centerline, and a direction of extension of the decoration seam to be the same as the direction of the extension of the trench,
wherein a groove into which the seam allowance portion is to be inserted is provided in the auxiliary portion,
wherein the skin portion includes a first sheet and a second sheet that are in a state of being separated from each other before being stitched onto each other with the main seam,
wherein, when with the main seam, the first sheet and the second sheet are stitched onto each other, a first end portion that corresponds to an edge portion of the first sheet is bent in such a manner as to be inserted from the first sheet into the groove in the arbitrary portion, and a second end portion that corresponds to an edge portion of the second sheet is bent in such a manner as to be inserted from the second sheet into the groove in the auxiliary portion,
wherein a first surface of the first end portion, which is an extension of an external surface of the first sheet that is exposed to the outside, and a second surface of the second end portion, which is an extension of an external surface of the second sheet that is exposed to the outside are brought into contact with each other in a state of facing each other, and form a contact surface between the end portions, after the main seam is formed,
wherein a first rear surface that is opposite in direction to the first surface of the first end portion, and a second rear surface that is opposite in direction to the second surface of the second end portion are positioned at positions, respectively, that are symmetrical with respect to the contact surface of the end portions, and form an exposure surface of the end portion of the seam allowance portion, after the main seam is formed,
wherein the groove in the auxiliary portion includes both sidewalls and a bottom surface between both the sidewalls,
wherein the exposure surface of the end portion, when inserted into the groove in the auxiliary portion, is brought into contact with both the sidewalls of the groove, and
wherein the first end portion and the second end portion that form the seam allowance portion extend from the main seam toward the bottom surface of the groove.

16. The vehicle interior component according to claim 15, wherein a first internal wall and a second internal wall that face each other are formed in the trench,
wherein the first internal wall has a curve or a slope along which the auxiliary portion is moved toward the second internal wall due to physical interference when the auxiliary portion is pushed down with respect to the trench, and
wherein the second internal wall has a curve or a slope along which the auxiliary portion is moved toward the first internal wall due to physical interference when the auxiliary portion is pushed down with respect to the trench.

17. The vehicle interior component according to claim 15, wherein with the decoration seam, the arbitrary portion is stitched onto the skin portion.

18. The vehicle interior component according to claim 15, wherein a first wing portion that, with the decoration seam, is stitched onto the skin portion is provided on the auxiliary portion, and
wherein with the wing portion, the decoration seam aligns with the auxiliary portion.

19. The vehicle interior component according to claim 15, wherein a first wing portion is provided on both flank surfaces of the auxiliary portion, and
wherein a wing notch portion is provided by making a notch in a part of the first wing portion.

20. The vehicle interior component according to claim 15, wherein a second wind portion that, with the main seam, is stitched onto the seam allowance portion is provided on the auxiliary portion.
